# EUROPEAN PATENT SPECIFICATION

(11) **EP 3 546 641 B1**
(45) Date of publication and mention of the grant of the patent: **25.01.2023**
(21) Application number: 17874567.5
(22) Date of filing: 28.11.2017
(51) Int. Cl.: D06M 11/76, B32B 5/16, D21H 17/69, D21H 19/36, D21H 27/30, D21H 17/70, D21H 17/00

(54) **METHOD FOR PRODUCING COMPOSITE BODY OF FIBERS AND INORGANIC PARTICLES, AND LAMINATE CONTAINING COMPOSITE BODY OF FIBERS AND INORGANIC PARTICLES**
VERFAHREN ZUR HERSTELLUNG EINES VERBUNDKÖRPERS AUS FASERN UND ANORGANISCHEN PARTIKELN SOWIE LAMINAT MIT EINEN VERBUNDKÖRPER AUS FASERN UND ANORGANISCHEN PARTIKELN
PROCÉDÉ DE PRODUCTION D'UN CORPS COMPOSITE CONSTITUÉ DE FIBRES ET DE PARTICULES INORGANIQUES ET STRATIFIÉ CONTENANT UN CORPS COMPOSITE CONSTITUÉ DE FIBRES ET DE PARTICULES INORGANIQUES

(30) Priority: 28.11.2016 JP 2016230129
(43) Date of publication of application: 02.10.2019
(73) Proprietor: Nippon Paper Industries Co., Ltd., Tokyo 114-0002 (JP)
(72) Inventor: OISHI, Masatoshi, Tokyo 114-0002 (JP); FUKUOKA, Moe, Tokyo 114-0002 (JP); NAKATANI, Toru, Tokyo 114-0002 (JP); GOTO, Shisei, Tokyo 114-0002 (JP)
(74) Representative: Goddar, Heinz J.
(86) International application number: PCT/JP2017/042681
(87) International publication number: WO 2018/097324

(56) References cited:
- WO-A1-2004/038101
- WO-A1-2005/005726
- WO-A1-2012/002390
- WO-A1-2012/022836
- WO-A1-2017/043580
- WO-A1-2017/057154
- AU-A1- 2003 248 412
- JP-A- 2000 220 097
- JP-A- 2003 251 725
- JP-A- 2006 503 997
- JP-A- 2011 506 789
- JP-A- 2013 170 329
- JP-A- 2015 199 655
- JP-A- 2015 199 660
- US-A- 5 679 220

## Description

### Technical Field

The present invention relates to a method for producing a composite of fibers and inorganic particles and to a laminate containing the composite of fibers and inorganic particles. In particular, the present invention relates to a method for producing a composite of fibers and inorganic particles with a processing step, and to a laminate containing the composite of fibers and inorganic particles.

### Background Art

In recent years, it has been found that a unique composite having characteristics of both fibers and inorganic particles can be obtained by combining fibers and inorganic particles.

For example, in regard to a technique to bind fibers and inorganic particles together, Patent Literature 1 discloses that characteristics (such as heat resistance, heat conductivity, and antibacterial property) of an inorganic compound can be given while maintaining transparency, a light-transmitting property, and a light diffusing property by mixing the inorganic compound with microfibrous cellulose. Moreover, in regard to a technique to deposit inorganic particles on fibers, Patent Literature 2 discloses a composite in which crystalline calcium carbonate is mechanically bonded onto fibers. Patent Literature 3 discloses a technique to produce a composite of pulp and calcium carbonate by depositing calcium carbonate in a pulp suspension with a carbon dioxide process. Patent Literature 4 discloses a method for removing or reducing hydrogen sulfide in an absorptive product by using a particulate material attached to pulp fibers by a yield improver.

### Citation List

### [Patent Literature]

Patent Literature 1: Japanese Patent Application Publication, Tokukai, No. 2012-007247
Patent Literature 2: Japanese Patent Application Publication, Tokukaihei, No. 06-158585 (1994)
Patent Literature 3: U.S. Patent No. 5679220
Patent Literature 4: Japanese Patent Application Publication, Tokukai, No. 2005-48351

### Summary of Invention

### Technical Problem

An object of the present invention is to provide a method for producing a composite of fibers and inorganic particles with a processing step, and to provide a laminate containing the composite of fibers and inorganic particles.

### Solution to Problem

As a result of intensive studies on the above object, the inventors of the present invention have found that at least one of strength, printability, waterproofness, beauty, and durability of a composite of fibers and inorganic particles can be improved by a method according to claim 1.

That is, the present invention encompasses but not limited to the following features:
· A method for producing a composite of inorganic particles and fibers, the method including the steps of: producing the composite of the inorganic particles and the fibers by synthesizing the inorganic particles in a solution containing the fibers; and processing the composite.

### Advantageous Effects of Invention

According to an aspect of the present invention, at least one of strength, printability, waterproofness, beauty, and durability of a composite of fibers and inorganic particles can be improved by the method for producing a composite of fibers and inorganic particles, the method including a step of producing a composite of inorganic particles and fibers by synthesizing the inorganic particles in a solution containing the fibers, and a step of processing the composite of inorganic particles and fibers.

### Brief Description of Drawings

Fig. 1 is a schematic view illustrating a reactor used to synthesize a composite of Example 1 (P: pump).
Fig. 2 is a schematic view illustrating a reactor used to synthesize a composite of Example 9.

### Description of Embodiments

### Step of processing composite of inorganic particles and fibers

According to an aspect of the present invention, a step of processing a composite of inorganic particles and fibers is provided after a step of producing the composite of the inorganic particles and the fibers by synthesizing the inorganic particles in a solution containing the fibers.

The step of processing a composite of inorganic particles and fibers refers to all steps of processing the composite into a specific form in a process during which the composite is used or in a process of commercializing the composite. For example, the step of processing a composite of inorganic particles and fibers can be a step of forming the composite of fibers and inorganic particles into a sheet, a coating step, a laminating step, a printing step, a bonding step, or the like. Moreover, in an aspect of the present invention, plural kinds of processes can be appropriately combined as the processing step. It is possible to provide two or more steps of processing a composite of inorganic particles and fibers, and it is preferable that a step of forming the composite into a sheet is further included as a step of processing a composite of inorganic particles and fibers before a particular step of processing the composite (for example, before a processing step other than the formation of a sheet). The method for forming a sheet includes a process in which a composite fiber slurry is supplied to a continuous paper machine to continuously make a slurry-derived paper sheet. Alternatively, a laminated sheet can be produced by supplying plural kinds of composite fiber containing slurries to the continuous paper machine to continuously make slurry-derived paper sheets so that the slurry-derived paper sheets are laminated.

### Coating step

According to an aspect of the present invention, a step of coating the composite of inorganic particles and fibers can be provided after the step of producing the composite of the inorganic particles and the fibers by synthesizing the inorganic particles in a solution containing the fibers.

Examples of a coating solution include a pigment coating solution containing a pigment and an adhesive agent, a surface treatment solution containing an adhesive agent, and the like. By coating the composite of inorganic particles and fibers with the coating solution, a laminate including (i) a layer containing the composite of inorganic particles and fibers and (ii) a coating layer containing a pigment and an adhesive agent or a coating layer containing an adhesive agent is obtained. The coating layer can be one layer or can be two or more layers.

### (1) Pigment coating solution containing pigment and adhesive agent

According to an aspect of the present invention, it is possible to employ a publicly known pigment. Examples of the pigment include inorganic pigments such as kaoline, clay, engineered kaoline, delaminated clay, heavy calcium carbonate, light calcium carbonate, talc, titanium dioxide, barium sulfate, calcium sulfate, zinc oxide, silicic acid, silicate, colloidal silica, and satin white, and organic pigments such as a solid type pigment, a hollow type pigment, and a core shell type pigment. These pigments can be used in combination of two or more types.

According to an aspect of the present invention, it is preferable to use kaoline or clay. A total amount of kaoline or clay is preferably not less than 20 parts by weight and less than 50 parts by weight, more preferably 20 parts by weight to 48 parts by weight, further preferably 30 parts by weight to 47 parts by weight, with respect to 100 parts by weight of the pigment. As another pigment, calcium carbonate such as heavy calcium carbonate or light calcium carbonate is preferable.

According to an aspect of the present invention, it is preferable to use a pigment in which a ratio of particles having a particle diameter of 2 pm or less is 80% or higher of the entire particles when particle size distribution is measured by a sedimentation method. The ratio is more preferably 85% or higher, and further preferably 90% or higher. The particle size distribution of pigment measured in the sedimentation method can be measured by, for example, Sedigraph 5100 manufactured by Shimadzu Corporation.

The pigment coating solution contains an adhesive agent (binder) as a matrix. The adhesive agent used in an aspect of the present invention is not limited and a publicly known adhesive agent can be used. Examples of the adhesive agent include latexes such as various copolymers such as a styrene-butadiene-based copolymer, a styrene-acrylic copolymer, an ethylene-vinyl acetate-based copolymer, a butadiene-methyl methacrylate-based copolymer, and a vinyl acetate-butyl acrylate-based copolymer, a maleic anhydride copolymer, and an acrylic acid-methyl methacrylate-based copolymer; polyvinyl alcohols such as completely saponified polyvinyl alcohol, partially saponified polyvinyl alcohol, carboxy denatured polyvinyl alcohol, and acetoacetyl denatured polyvinyl alcohol; proteins such as casein, soy protein, and synthetic protein; starches such as oxidized starch, positive starch, urea phosphate esterified starch, etherified starches such as hydroxyethyl etherified starch, and dextrin; cellulose derivatives such as carboxymethyl cellulose, hydroxyethyl cellulose, and hydroxymethyl cellulose; and the like. These adhesive agents can be used in combination of two or more types.

An amount of the adhesive agent is preferably 5 parts by weight to 20 parts by weight, more preferably 8 parts by weight to 16 parts by weight, with respect to 100 parts by weight of the pigment, in view of printability and coatability. In a case where the total amount of the adhesive agent exceeds 20 parts by weight, viscosity of the pigment coating solution becomes high, and an operation trouble tends to occur in the coating process. In addition, a drying property of ink tends to decrease. In contrast, in a case where the total amount of the adhesive agent is less than 5 parts by weight, it becomes difficult to obtain sufficient surface strength.

According to an aspect of the present invention, it is preferable to contain a latex in an amount of 20% by weight to 50% by weight, preferably in an amount of 25% by weight to 45% by weight, with respect to the whole adhesive agent. It is particularly preferable to use any of starches as another adhesive agent. Starches are preferred because starches achieve a higher water retaining property of a pigment coating solution as compared with a latex, and this makes the coating solution less likely to sink into the base sheet and allows the base sheet to be effectively coated with the pigment coating layer. In other words, the use of starches provides a good coating property of the pigment coating layer on the base sheet. As a result, it is possible to expect improvement in printing quality, particularly in print glossiness, and improvement in ink drying property.

The pigment coating solution can optionally contain a dispersing agent, a thickener, a water retaining agent, an anti-foaming agent, a water resistant agent, and/or any of various types of assistants to be mixed into an ordinary pigment for coating paper.

### (2) Surface treatment solution containing adhesive agent

According to an aspect of the present invention, a surface treatment solution containing starch can be applied onto the composite of inorganic particles and fibers in order to achieve at least one of improvement in surface strength, waterproofness, printability, and writability.

A type of adhesive agent used in the surface treatment solution is not particularly limited, but the surface treatment solution preferably contains starch. Adhesive agents other than starch can be any of cellulose derivatives such as carboxymethyl cellulose, hydroxyethyl cellulose, methyl cellulose, and cellulose nanofiber, polyacrylamide, any of denatured alcohols such as polyvinyl alcohol, carboxyl denatured polyvinyl alcohol, and acetoacetylated polyvinyl alcohol, a latex, a styrene-butadiene-based copolymer, polyvinyl acetate, a vinyl chloride-vinyl acetate-based copolymer, polyvinyl chloride, polyvinylidene chloride, polyacrylic ester, and the like, and those adhesive agents can be used solely or in combination of two or more types. According to an aspect of the present invention, a ratio of starch accounting for the adhesive agent in the surface treatment solution is preferably not less than 50% by weight. The ratio is more preferably not less than 80% by weight. In a case where the ratio is less than 50% by weight, the viscosity of the surface treatment solution decreases, and this may cause adverse effects such as deterioration in strength and stiffness, and a cost increases.

An origin of the starch used in the surface treatment solution is not particularly limited and, for example, starch such as corn starch, tapioca starch, potato starch, wheat starch, or rice starch can be appropriately used.

According to an aspect of the present invention, any of starches subjected to various kinds of denaturation by known methods can be used. Examples of the denaturation methods include processes such as enzyme denaturation using α-amylase or the like, esterification, cationization, acetylation, aldehydization, and hydroxyethylation. The esterification can be a process such as acetic acid esterification or phosphoric acid esterification. The etherification can be a process such as carboxy etherification or hydroxy etherification. In order to highly express an aging stability improving effect of an aspect of the present invention, it is preferable to use (i) a self-denatured starch whose viscosity is lowered by denaturation processing in a paper mill with use of acetylated tapioca starch or the like as a raw material, in particular, an APS denatured starch obtained by thermochemical denaturation caused by adding an ammonium persulfate (APS) as an oxidizer, or (ii) an enzyme denatured starch that has been hydrolyzed with use of α-amylase. It is easy to adjust, in the production site, the viscosity of the self-denatured starch obtained by carrying out denaturation processing in the paper mill, and the self-denatured starch is also advantageous in terms of cost.

In regard to the composite of inorganic particles and fibers in accordance with an aspect of the present invention, it is preferable that the aging stability of the surface treatment solution that contains starch is higher. In particular, the surface treatment solution preferably contains a surfactant as an aging stability improver. Although this mechanism is not clear, it can be thought that addition of the surfactant introduces a hydrophobic portion of the surfactant into an α-helix structure of amylose in the starch, and this inhibits reassociation. The surfactant can be added either before or after steaming the starch, but it is preferable to add the surfactant before steaming. This is because it is thought that a share is applied to the surfactant during steaming, and the surfactant disperses more evenly with respect to starch. It is possible to use two or more types of surfactants in combination.

The surfactant that is used in an aspect of the present invention is not particularly limited, and it is preferable to use a higher fatty acid compound containing a polyoxyalkylene chain, or to use glycerin fatty acid ester or a derivative thereof. The higher fatty acid compound containing a polyoxyalkylene chain is preferably, but not limited to, polyoxyethylene alkylether (CₙH₂ₙ₊₁O-(EO)ₘ-H) having a carbon number n of 8 or more and 18 or less and an ethylene oxide (EO) added mole number m of 2 or more and 60 or less, polyoxyethylene polyoxypropylene alkylether (CₙH₂ₙ₊₁-(PO)ₓ-(EO)_{y}-H) having a carbon number n of 8 or more and 18 or less, a propylene oxide (PO) added mole number x of 2 or more and 60 or less, and an EO added mole number y of 2 or more and 60 or less, or the like, and is particularly preferably, but not limited to, polyoxyethylene lauryl ether or polyoxyethylene polyoxypropylene myristyl ether. The glycerin fatty acid ester (CₙH₂ₙ₊₁-C₄H₇O₄) preferably has the carbon number n of 8 or more and 18 or less. Further preferably, the glycerin fatty acid ester is monoglycerin fatty acid ester, diglycerin fatty acid ester, or an organic acid derivative or a phosphoric acid compound derivative thereof, and the glycerin fatty acid ester is particularly preferably monoglyceride stearate. Note, however, that the glycerin fatty acid ester is not limited to these examples. According to an aspect of the present invention, the polyoxyethylene alkylether (CₙF₂ₙ₊₁O-(EO)ₘ-H) can have the carbon number n of 10 to 14, and the EO added mole number m of 2 to 10. The glycerin fatty acid ester (CₙH₂ₙ₊₁-C₄H₇O₄) can have the carbon number n of, for example, 14 to 18.

In order to enhance a sizing property, a sizing agent can also be mixed in the surface treatment solution. In a case where the sizing agent is used, any of various sizing agents can be used. For example, a surface sizing agent such as a styrene-based sizing agent, an olefin-based sizing agent, an acrylate-based sizing agent, a styrene-acrylic sizing agent, or a cationic sizing agent can be used. In a case where the surface sizing agent is used, an amount of the surface sizing agent is preferably 0.05% by weight to 5% by weight, further preferably 1% by weight to 3% by weight, in terms of solid concentration in the surface treatment solution.

Further, as the surface treatment solution in accordance with an aspect of the present invention, various types of assistants, such as a dispersing agent, a thickener, a water retaining material, an anti-foaming agent, a water resistant agent, a coloring agent, and an electrically conductive agent, which are mixed in an ordinary surface treatment solution, are optionally used as appropriate.

An application amount of the surface treatment solution is determined as appropriate depending on surface strength demanded for paper, and is not particularly limited. Normally, a total application amount on both sides falls within a range of 0.1 g/m² to 10 g/m². The application amount is preferably 0.1 g/m² to 5 g/m², more preferably 0.1 g/m² to 2.0 g/m². In a case where the coating amount is increased, an absolute amount of water in the coating layer is increased, so that a drying load is increased and poor drying easily occurs.

### (3) Smoothing process on composite of inorganic particles and fibers

The base sheet is preferably subjected to a smoothing process by any of various calendering devices prior to coating the obtained composite of inorganic particles and fibers with a pigment coating solution containing a pigment and an adhesive agent or with a surface treatment solution containing an adhesive agent. As the calendering device, a commonly used calendering device such as a supercalender or a soft calender can be used as appropriate. As calendering processing conditions, a temperature of a rigid roll, a calendering pressure, the number of nips, a roll velocity, a water content of paper before calendering, and the like are appropriately selected in accordance with demanded qualities.

### (4) Preparation of coating solution

The pigment coating solution containing a pigment and an adhesive agent in accordance with an aspect of the present invention can be prepared by dispersing or dissolving a pigment, an adhesive agent, and optionally an additive in water. The surface treatment solution containing an adhesive agent can be prepared by dispersing or dissolving an adhesive agent and optionally an additive in water. A formulation of components is adjusted so that the pigment coating layer described above can be formed. In a case where blade coating is carried out, a solid concentration of the pigment coating solution is preferably 40% by weight to 70% by weight, more preferably 60% by weight to 70% by weight. A viscosity of the pigment coating solution preferably ranges from 500 mPa·s to 3000 mPa·s in terms of B-type viscosity measured at 60 rpm at a room temperature.

### (5) Coating method

The coating step in accordance with an aspect of the present invention can be carried out by a known method, and any of known coating machines such as a two-roll size press, a gate roll coater, a rod metering size press, a blade coater, a spray coater, and a curtain coater can be used. A coating speed is not particularly limited. The coating speed is preferably 400 m/min to 1800 m/min in a case of the blade coater, and the coating speed is preferably 400 m/min to 2000 m/min in a case of the roll coater.

The coating layer can be one (1) layer or two or more layers. It is possible that a clear coating layer is provided on the composite of inorganic particles and fibers, and a pigment coating layer is provided on the clear coating layer.

### (6) Other step

A method for drying the coating layer in a wet state is not limited and, for example, a steam heating cylinder, a heated hot air dryer, a gas heater dryer, an electric heater dryer, an infrared heater dryer, or the like can be used.

After drying the coating layer in the wet state, the coating layer can be subjected to the smoothing process by use of any of various calendering devices or can be untreated or treated later. As the calendering device, a commonly used calendering device can be used as appropriate, and a supercalender, a gloss calender, a soft calender, a high temperature soft nip calender, or the like can be used. As calendering processing conditions, a temperature of a rigid roll, a calendering pressure, the number of nips, a roll velocity, a water content of paper before calendering, and the like are appropriately selected in accordance with demanded qualities.

### Laminating step

According to an aspect of the present invention, a step of laminating the composite of inorganic particles and fibers can be provided after the step of producing the composite of the inorganic particles and the fibers by synthesizing the inorganic particles in a solution containing the fibers.

A lamination layer in accordance with an aspect of the present invention is composed of a thermoplastic resin. By providing the thermoplastic resin on the composite of inorganic particles and fibers, a laminate is obtained which includes a layer containing the composite of inorganic particles and fibers and a lamination layer containing the thermoplastic resin.

As the thermoplastic resin, it is possible to use a resin that can be used in extrusion lamination, and examples of such a resin include polyolefin-based resins such as a polyethylene resin, a polypropylene resin, and a polymethylpentene resin, a polystyrene resin, a polyester resin, and a nylon resin. Alternatively, it is possible to use graft denatured polyethylene, a copolymer of ethylene and acrylic acid or acrylic acid ester, or the like. A filler such as an inorganic pigment can be added to the thermoplastic resin. Examples of the filler include titanium oxide, calcium carbonate, silica, talc, kaoline, carbon black, metal powder, and the like.

An extrusion laminating method is used as a method for producing a laminated sheet in accordance with an aspect of the present invention. That is, the thermoplastic resin is subjected to extrusion molding to form a sheet layer, and the sheet layer and a gel precursor layer are bonded together to obtain a laminated sheet prior to solidification of the extruded thermoplastic resin.

Operating conditions such as a melting temperature of resin and a lamination speed of resin in the extrusion laminating method are not particularly limited and can be appropriately set depending on a type of resin and a device which are to be used. In general, for example, the melting temperature is approximately 200°C to 350°C and the lamination speed is approximately 10 m/min to 200 m/min. It is preferable that a nip roll having a hardness of 70 degrees or more (JIS K-6253) is used, and pressing and pressure bonding are carried out at a linear pressure of 15 kgf/cm or more.

In a case where two or more thermoplastic resin layers are laminated (e.g., in a case where a sheet layer is formed of a plurality of thermoplastic resin layers), a method is suitably employed in which thermoplastic resins in a molten state are guided to respective T dies by using a plurality of extruders, and the resins are simultaneously extruded from the respective T dies to be laminated and bonded together, in view of adherence between thermoplastic resin layers and production efficiency. Such a method in which a plurality of thermoplastic resin layers can be simultaneously formed is particularly called coextrusion laminating method among extrusion laminating methods. Further, an adhesive resin layer can be provided between the thermoplastic resin layers to enhance adhesiveness between the resin layers. In any of these cases, a corona treatment, ozonization, or the like can be optionally carried out to improve adhesiveness of the gel precursor layer and the thermoplastic resin.

### Printing step

According to an aspect of the present invention, a step of printing on the composite of inorganic particles and fibers can be provided after the step of producing the composite of the inorganic particles and the fibers by synthesizing the inorganic particles in a solution containing the fibers. By carrying out printing with respect to the composite of inorganic particles and fibers, a laminate is obtained which includes a layer containing the composite of inorganic particles and fibers and a printed layer.

According to an aspect of the present invention, the printing step can be carried out with any of various printing methods such as offset printing, gravure printing, relief printing, intaglio printing, UV printing, and electrophotography. On a printing surface, various inks such as lithographic inks, flexographic inks, gravure inks, water-based inks, solvent inks, soy oil-based inks, newspaper printing inks, sheet-fed printing inks, web offset printing inks, metallic inks, UV inks, EB inks, and conductive materials such as silver paste can be used.

### Bonding step

According to an aspect of the present invention, after the step of producing the composite of the inorganic particles and the fibers by synthesizing the inorganic particles in a solution containing the fibers, a step of bonding the composite and a material, which is identical with or different from the composite, together can be provided.

The material identical with the composite refers to a composite obtained from fibers and inorganic particles of the same type as the composite.

The material different from the composite can be a composite in which at least one of inorganic particles and fibers is of a different type, or can be a material other than a composite of inorganic particles and fibers. The material other than the composite can be, for example, a nonwoven fabric, a film, or the like. Among these, the nonwoven fabric is more preferably a nonwoven fabric containing cellulosic fibers and synthetic fibers. Details will be described as follows.

### (1) Cellulosic fibers

According to an aspect of the present invention, the nonwoven fabric contains cellulosic fibers. The cellulosic fibers can be, for example, wood pulp; bamboo, cotton, hemp, jute, kenaf, agricultural waste, non-wood pulp such as animal (e.g., ascidian), algae, microbial (e.g., acetobacter) products; and the like. The cellulosic fiber is preferably wood pulp, and one or more kinds of ordinary cellulosic fibers can be mixed and used.

A number average fiber diameter and a number average fiber length of the cellulosic fiber are not particularly limited, and cellulosic fiber having any values of those parameters can be used depending on demanded mechanical characteristics such as tensile strength and tear strength, breathability, texture, and the like. It is possible to mix (in any ratio) and use two or more kinds of fibers differing in number average fiber diameter and in number average fiber length.

For example, in a case of needle bleached kraft pulp (NBKP), which is one of natural cellulosic fibers, the number average fiber diameter is approximately 30 pm to 60 pm and the number average fiber length is approximately 3 mm to 5 mm. In a case of leaf bleached kraft pulp (LBKP), the number average fiber diameter is approximately 10 pm to 30 pm, and the number average fiber length is approximately 1 mm to 2 mm.

Those cellulosic fibers can be subjected to a beating process one or more times in the producing step until being contained in a nonwoven fabric. Here, the beating process is a process of applying mechanical shearing force to fibers. The beating process causes some of the cellulosic fibers to become fibrils or nanofibers, and this improves mechanical characteristics such as tensile strength. As an index of a degree of beating, generally, freeness (CSF) is used. The freeness of metal ion containing cellulosic fibers preferably ranges from 30 ml to 600 ml. In a case where the freeness is lower than 30 ml, a yield into the nonwoven fabric is reduced in the nonwoven fabric production step and, in a case where the freeness is higher than 600 ml, deodorizing and antibacterial effects may be lowered due to insufficient fibrillation.

The freeness of the cellulosic fibers is not particularly limited, and can be freely selected from a typical freeness range, for example, a range of 5 ml to 950 ml, depending on demanded quality.

A device used in the beating is not particularly limited, and any known device can be used. Examples of the beating device include a refiner, a beater, a PFI mill, a kneader, a disperser, and the like that subject pulp fibers to a metal or a blade about a rotating shaft or cause friction between pulp fibers. Further, the beating device can be a high-pressure homogenizer, an ultra-high-pressure homogenizer, a Nano-Mizer, various mills, a stone mill type grinder, and the like.

### (2) Synthetic fibers

According to an aspect of the present invention, the nonwoven fabric contains synthetic fibers, i.e., at least one kind of fibers made of a synthetic resin in which organic small molecules such as petroleum are polymerized. Generally, synthetic fibers are inferior in terms of hygroscopicity, absorbency, flexibility, and the like but are superior in terms of dimensional stability, light resistance, and the like, as compared with the above described cellulosic fibers.

From the viewpoint of dimensional stability, it is preferable that a contained amount of synthetic fibers is not less than 5% by mass with respect to the nonwoven fabric. Moreover, a contained amount of the metal ion containing cellulosic fibers is preferably not less than 1% by mass with respect to the nonwoven fabric, and therefore the contained amount of synthetic fibers is preferably not more than 99% by mass with respect to the nonwoven fabric.

A type of the synthetic fibers is not particularly limited and can be, for example, polyester-based fibers such as polyethylene terephthalate (PET) fibers, polybutylene terephthalate (PBT) fibers, polyethylene naphthalate (PEN), and polyethylene isophthalate (PEI) fibers, polyolefin-based fibers such as polypropylene (PP) fibers, polyethylene (PE) fibers, ethylene-vinyl alcohol copolymer fibers, and ethylene-vinyl acetate copolymer fibers, polyacrylic fibers, polyamide-based fibers, polyvinyl alcohol (PVA) based fibers, polylactic acid (PLA) based fibers, composite fibers such as polyester-based copolymer resin-polyester resin, polyethylene resin-polyester resin, ethylene-vinyl alcohol copolymer resin-polyester resin, polyester-based copolymer resin-polypropylene resin, polyethylene resin-polypropylene resin, ethylene-vinyl alcohol copolymer resin-polypropylene resin, and ethylene-vinyl acetate copolymer resin-polypropylene resin, and the like.

### (3) Other materials

According to an aspect of the present invention, the nonwoven fabric can optionally contain one or more types of other materials, in addition to the cellulosic fibers and the synthetic fibers. Types of other materials include, but are not limited to, stabilizers such as a heat-resistant stabilizer and a weather-resistant stabilizer, a filler, an antistatic agent, a slipping agent, an antiblocking agent, an antifoggant, a lubricant, a dye, a pigment, a natural oil, a synthetic oil, a wax, and the like. These materials can be used alone, or two or more types of these can be used in combination. A total contained amount of these materials preferably does not exceed 10% by mass with respect to the nonwoven fabric.

Examples of the stabilizer include anti-aging agents such as 2,6-di-t-butyl-4-methyl-phenol (BHT); tetrakis[methylene-3-(3,5-di-t-butyl-4-hydroxyphenyl)propionate]methane, β-(3,5-di-t-butyl-4-hydroxyphenyl)alkyl ester propionate, 2,2'-oxamidobis[ethyl-3-(3,5-di-t-butyl-4-hydroxyphenyl)propionate], phenolic antioxidants; fatty acid metal salt such as zinc stearate, calcium stearate, and 1,2-hydroxy calcium stearate; polyhydric alcohol fatty acid ester such as glycerol monostearate, glycerol distearate, pentaerythritol monostearate, pentaerythritol distearate, and pentaerythritol tristearate; and the like.

Examples of the filler include silica, diatomaceous earth, alumina, titanium oxide, magnesium oxide, pumice powder, pumice balloon, aluminum hydroxide, magnesium hydroxide, basic magnesium carbonate, dolomite, calcium sulfate, potassium titanate, barium sulfate, calcium sulfite, talc, clay, mica, asbestos, calcium silicate, montmorillonite, bentonite, graphite, aluminum powder, molybdenum sulfide, and the like.

Examples of the coloring agent include inorganic-based coloring agents such as titanium oxide and calcium carbonate, and organic-based coloring agents such as phthalocyanine.

Examples of the lubricant include oleic amide, erucic acid amide, stearic acid amide, and the like.

### (4) Method for producing nonwoven fabric

According to an aspect of the present invention, a nonwoven fabric can be made from the cellulosic fibers, the synthetic fibers, and optionally other materials to be contained, by forming an integrated layer of fibers called fleece, bonding the fibers together, and optionally carrying out processing such as dyeing, laminating, and coating.

A method of forming the fleece is not particularly limited, and a known method can be used. Examples of the method include a dry process in which dried fibers are formed into fleece by using a machine called "card" or arranging the fibers in a fixed direction or randomly by an air stream (this technique is called "air-laying"); a wet process in which the fibers are dispersed in water and scooped up with a meshy net, as in making papers; and a spunbonding process in which a molten raw material resin is eluted and spun directly from a tip of a nozzle to form fleece with a continuous long fiber.

In particular, it is preferable to use the wet process because cellulosic fibers are hydrophilic. In a case where the wet process is employed, it is possible to produce the nonwoven fabric using a conventional paper making method. As a paper machine, various conventionally known machines, for example, a cylinder paper machine, an inclined short net paper machine, a Fourdrinier machine, a short net paper machine, and the like can be used. It is possible to use two or more paper machines in combination as appropriate depending on demanded characteristics. The drying step in the papermaking method can be a Yankee dryer type, a multi-cylinder type, a hot air type, an infrared heat type, or the like.

A method of bonding the fibers together is not particularly limited, and a known method can be used. Examples of the method include a chemical bonding method in which fleece is impregnated with an emulsion-based adhesive resin or the emulsion-based adhesive resin is sprayed to adhere to the fleece, and then the fleece is heated and dried so that intersections of the fibers are bonded together; a thermal bonding method in which fleece obtained by mixing heat-fusing fibers having a low melting point is passed through hot rolls so as to be subjected to thermocompression bonding, or the fibers are bonded together by applying hot air; a needle punching method in which fleece is repeatedly pierced with a needle that moves up and down at a high speed and fibers are entangled by a projection called a barb that is engraved on the needle; a hydroentangling method in which a high-pressure water stream in a columnar form is injected into fleece to entangle the fibers; and the like. In particular, the chemical bonding method is preferable.

According to an aspect of the present invention, the nonwoven fabric can have a monolayer structure or a multilayer structure. In a case of the multilayer structure, at least one or more layers need to contain cellulosic fibers carrying the metal ions. In a case where a total number of layers is three or more and an outermost layer contains cellulosic fibers carrying the metal ions, deodorizing and antibacterial effects are advantageously further brought about.

A weight per unit area (basis weight) of the nonwoven fabric is preferably in a range of 10 g/m² to 100 g/m², further preferably in a range of 20 g/m² to 80 g/m². In a case where the nonwoven fabric has the multilayer structure, it is preferable that a basis weight of each layer is 10 g/m² or more in order to produce a sheet which is uniform and has a minimally necessary strength for handling in the production. Note that the weight per unit area of nonwoven fabric in an aspect of the present invention refers to a mass (g) per 1 m² of the nonwoven fabric, which is measured as follows: that is, a nonwoven fabric having an area of 0.05 m² or more is dried at 105°C to have a steady mass, then the nonwoven fabric is left in a constant temperature room at 20°C and 65% RH for 16 hours or more, and then the mass of the nonwoven fabric is measured.

A thickness of the nonwoven fabric is preferably in a range of 20 pm to 500 pm, further preferably in a range of 30 pm to 100 pm. In a case where the nonwoven fabric has the multilayer structure, it is preferable that a thickness of each layer is 20 pm or more in order to produce a sheet which is uniform. A density of the nonwoven fabric is not particularly limited.

The nonwoven fabric in accordance with an aspect of the present invention can be used as it is or can be optionally laminated on a base material such as another nonwoven fabric, and/or subjected to various processes such as embossing and pleating, and thus suitably used for various purposes of use such as a filter for gas or liquid. Other purposes of use include hygiene products such as diapers, sanitary goods, wipers, and masks, filters for filtering gases or liquids, materials for building and construction such as roofing materials, automobile interior materials, clothing, and the like.

### Composite of inorganic particles and fibers

According to an aspect of the present invention, inorganic particles and fibers are complexed with each other.

### Fibers

The fibers constituting the composite are not particularly limited as long as fibers are used. For example, not only natural fibers but also regenerated fibers (semisynthetic fibers) such as rayon and lyocell, synthetic fibers, and the like can be used without restriction. Examples of the raw material of fibers include pulp fibers (wood pulp and non-wood pulp), cellulose nanofibers, bacterial cellulose, animal-derived cellulose such as ascidian, and algae, and the wood pulp can be produced by converting wood feedstock into pulp. Examples of the wood feedstock include coniferous trees such as Japanese red pine, Japanese black pine, Sakhalin fir, Yezo spruce, *Pinus koraiensis,* Japanese larch, Japanese fir, Southern Japanese hemlock, Japanese cedar, Hinoki cypress, Japanese larch, *Abies veitchii,* spruce, Hinoki cypress leaf, Douglas fir, hemlock, white fir, spruce, Balsam fir, cedar, pine, Merkusii pine, and Radiata pine, and admixtures thereof; and broadleaf trees such as Japanese beech, birch, Japanese alder, oak, *Machilus thunbergii, Castanopsis,* Japanese white birch, Japanese aspen, poplar, Japanese ash, Japanese poplar, eucalyptus, mangrove, lauan, and acacia, and admixtures thereof.

A method for converting the natural material such as wood feedstock (woody raw material) into pulp is not particularly limited, and, for example, a pulping method commonly used in the paper industry can be employed. Wood pulp can be classified depending on the pulping method, for example, chemical pulp digested by a kraft method, a sulfite method, the soda method, a polysulfide method, or the like; mechanical pulp obtained by pulping with mechanical force such as a refiner, a grinder, or the like; semi-chemical pulp obtained by pulping with mechanical force after pretreatment with chemicals; wastepaper pulp; deinked pulp; and the like. The wood pulp can be unbleached (i.e., before bleaching) or bleached (i.e., after bleaching).

Examples of the non-wood pulp include cotton, hemp, sisal hemp, Manila hemp, flax, straw, bamboo, bagasse, kenaf, sugar cane, corn, rice straw, paper mulberry, paper bush, and the like.

The pulp fibers can be either unbeaten or beaten, and can be selected according to physical properties of the composite sheet. It is preferable that the pulp fibers are beaten. By the beating, it is possible to expect improvement in sheet strength and promotion of fixing of inorganic particles to the pulp fibers.

These cellulose raw materials can also be further processed to be used as pulverized cellulose, chemically denatured cellulose such as oxidized cellulose, and cellulose nanofibers: CNF (microfibrillated cellulose: MFC, TEMPO-oxidized CNF, phosphoric acid esterified CNF, carboxymethylated CNF, mechanically pulverized CNF, and the like). The pulverized cellulose used in an aspect of the present invention includes both cellulose that is generally called powdered cellulose and the mechanically pulverized CNF. As the powdered cellulose, for example, it is possible to use (i) powdered cellulose produced by mechanically pulverizing carefully selected untreated pulp or crystalline cellulose powder that has a fixed particle size distribution, is in a rod-like shape, and is produced by refining, drying, pulverizing and sieving undecomposed residues obtained after acid hydrolysis, or (ii) commercially available products such as KC Flock (manufactured by Nippon Paper Industries, Co. Ltd.), CEOLUS (manufactured by Asahi Kasei Chemicals Corporation) and Avicel (manufactured by FMC). A degree of polymerization of cellulose in the powdered cellulose is preferably approximately 100 to 1500, a degree of crystallinity of the powdered cellulose by X-ray diffractometry is preferably 70% to 90%, and a volume average particle diameter measured by a laser diffraction particle size distribution measuring device is preferably 1 µm or more and 100 µm or less. The oxidized cellulose used in an aspect of the present invention can be obtained, for example, by oxidation in water with an oxidizer in the presence of N-oxyl compound and a compound selected from the group consisting of bromide, iodide and a mixture thereof. The cellulose nanofibers can be obtained by a method of fibrillating the cellulose raw material. Examples of the fibrillating method include a method in which a water suspension or the like of cellulose or chemically denatured cellulose such as oxidized cellulose is mechanically ground or beaten with use of a refiner, a high-pressure homogenizer, a grinder, a uniaxial or multiaxial kneader, a bead mill, or the like, so that the cellulose or chemically denatured cellulose is fibrillated. One or more of the above methods can be combined to produce cellulose nanofibers. A fiber diameter of the produced cellulose nanofibers can be confirmed by electron microscopy or the like, and ranges, for example, from 5 nm to 1000 nm, preferably from 5 nm to 500 nm, more preferably from 5 nm to 300 nm. In producing the cellulose nanofibers, it is possible that an optional compound is further added to react with the cellulose nanofibers to modify a hydroxyl group, before and/or after the cellulose is fibrillated and/or made finer. Examples of modifying functional groups include an acetyl group, an ester group, an ether group, a ketone group, a formyl group, a benzoyl group, acetal, hemiacetal, oxime, isonitrile, allene, a thiol group, a urea group, a cyano group, a nitro group, an azo group, an aryl group, an aralkyl group, an amino group, an amide group, an imido group, an acrylyl group, a methacryloyl group, a propionyl group, a propioloyl group, a butyryl group, a 2-butyryl group, a pentanoyl group, a hexanoyl group, a heptanoyl group, an octanoyl group, a nonanoyl group, a decanoyl group, an undecanoyl group, a dodecanoyl group, a myristoyl group, a palmitoyl group, a stearoyl group, a pivaloyl group, a benzoyl group, a naphthoyl group, a nicotinoyl group, an isonicotinoyl group, a furoyl group, an acyl group such as a cinnamoyl group, an isocyanate group such as a 2-methacryloyloxyethyl isocyanoyl group, a methyl group, an ethyl group, a propyl group, a 2-propyl group, a butyl group, a 2-butyl group, a tert-butyl group, a pentyl group, a hexyl group, a heptyl group, an octyl group, a nonyl group, a decyl group, an undecyl group, a dodecyl group, a myristyl group, a palmityl group, an alkyl group such as a stearyl group, an oxirane group, an oxetane group, an oxyl group, a thiirane group, a thietane group, and the like. Hydrogens in these substituents can be substituted with a functional group such as a hydroxyl group or a carboxy group. Moreover, a part of alkyl group can be an unsaturated bond. A compound used to introduce these functional groups is not particularly limited, and examples of such a compound include a compound having a group derived from phosphoric acid, a compound having a group derived from carboxylic acid, a compound having a group derived from sulfuric acid, a compound having a group derived from sulfonic acid, a compound having an alkyl group, a compound having a group derived from amine, and the like. The compound having the phosphoric acid group is not particularly limited, and examples of such a compound include phosphoric acid, and lithium dihydrogen phosphate, dilithium hydrogen phosphate, trilithium phosphate, lithium pyrophosphate, and lithium polyphosphate which are lithium salts of phosphoric acid. Further, examples of the compound having the phosphoric acid group include sodium dihydrogen phosphate, disodium hydrogen phosphate, trisodium phosphate, sodium pyrophosphate, and sodium polyphosphate, which are sodium salts of phosphoric acid. Further, examples of the compound having the phosphoric acid group include potassium dihydrogen phosphate, dipotassium hydrogen phosphate, tripotassium phosphate, potassium pyrophosphate, and potassium polyphosphate, which are potassium salts of phosphoric acid. Further, examples of the compound having the phosphoric acid group include ammonium dihydrogen phosphate, diammonium hydrogen phosphate, triammonium phosphate, ammonium pyrophosphate, ammonium polyphosphate, and the like which are ammonium salts of phosphoric acid. Among these, phosphoric acid, sodium salts of phosphoric acid, potassium salts of phosphoric acid, and ammonium salts of phosphoric acid are preferable, and sodium dihydrogen phosphate and disodium hydrogen phosphate are more preferable, from the viewpoint of efficient introduction of the phosphoric acid group and easy industrial application. Note, however, that the compound having the phosphoric acid group is not particularly limited. The compound having carboxyl group is not particularly limited, and examples of the compound include dicarboxylic acid compounds such as maleic acid, succinic acid, phthalic acid, fumaric acid, glutaric acid, adipic acid, and itaconic acid, and tricarboxylic acid compounds such as citric acid, and aconitic acid. An acid anhydride of the compound having carboxyl group is not particularly limited, and examples of the acid anhydride include acid anhydrides of dicarboxylic acid compounds such as maleic anhydride, succinic anhydride, phthalic anhydride, glutaric anhydride, adipic anhydride, and itaconic anhydride. A derivative of the compound having carboxyl group is not particularly limited, and examples of the derivative includes an imide compound of acid anhydride of the compound having carboxyl group and a derivative of acid anhydride of the compound having carboxyl group. The imide compound of acid anhydride of the compound having carboxyl group is not particularly limited, and examples of the imide compound include imide compounds of dicarboxylic acid compounds such as maleimide, succinimide, and phthalic imide. A derivative of acid anhydride of the compound having carboxyl group is not particularly limited. Examples of the derivative include those in which at least part of hydrogen atoms of an acid anhydride of the compound having carboxyl group (such as dimethylmaleic anhydride, diethylmaleic anhydride, and diphenylmaleic anhydride) are substituted with a substituent (e.g., an alkyl group, a phenyl group, and the like). Among the compound having a group derived from carboxylic acid, maleic anhydride, succinic anhydride, and phthalic anhydride are preferable because those are easily applied industrially and easily gasified. Note, however, that the compound having a group derived from carboxylic acid is not particularly limited. Alternatively, the cellulose nanofibers can be modified in a manner in which a modifying compound is physically adsorbed onto the cellulose nanofibers, without being chemically bound to the cellulose nanofibers. The compound to be physically adsorbed includes a surfactant or the like, and any one of anionic surfactant, cationic surfactant, and nonionic surfactant can be used. In a case where the modification is carried out with respect to the cellulose prior to fibrillating and/or pulverizing the cellulose, it is possible that those functional groups are desorbed after the fibrillating and/or pulverizing so that the original hydroxyl group is restored. By subjecting the cellulose to such modification, it is possible to facilitate fibrillation of the cellulose nanofibers and to make it easier to mix the cellulose nanofibers with various materials.

Composite fibers of synthetic fibers and fibers can also be used in an aspect of the present invention and, for example, composite fibers of fibers and polyester, polyamide, polyolefin, acrylic fibers, glass fibers, carbon fibers, various metal fibers, or the like can be used.

The fibers described above can be used alone or two or more types of the fibers can be mixed together. Among these, the fibers preferably include wood pulp or a combination of wood pulp and non-wood pulp and/or synthetic fibers, more preferably include wood pulp alone.

According to a preferable aspect, the fibers constituting the composite in accordance with an aspect of the present invention are cellulosic fibers or pulp fibers. For example, a fibrous substance recovered from paper mill wastewater can be supplied to a carbonation reaction in an aspect of the present invention. By supplying such a substance to a reaction tank, various composite particles can be synthesized and also, in terms of shape, fibrous particles or the like can be synthesized.

According to an aspect of the present invention, in addition to the fibers, substances can be used which do not directly participate in carbonation reaction but are incorporated into produced inorganic particles to form composite particles. According to an aspect of the present invention, fibers such as pulp fibers are used. In addition, it is possible to synthesize inorganic particles in a solution containing inorganic particles, organic particles, a polymer, and the like, and thus composite particles can be produced into which those substances are incorporated.

A fiber length of the fibers to be complexed is not particularly limited and an average fiber length can be, for example, approximately 0.1 pm to 15 mm, 1 pm to 12 mm, 100 pm to 10 mm, 500 pm to 8 mm, or the like.

### Inorganic particles

According to an aspect of the present invention, the inorganic particles to be complexed with fibers are not particularly limited, and are preferably water-insoluble or poorly water soluble inorganic particles. The inorganic particles are preferably insoluble or poorly soluble in water, because the inorganic particles may be synthesized in a water system and the composite may be used in a water system.

The inorganic particles in this specification refer to a metal or a metal compound. The metal compound is so-called inorganic salt that is obtained by an ionic bond of positive ions of metal (e.g., Na⁺, Ca²⁺, Mg²⁺, Al³⁺, Ba²⁺, or the like) and negative ions (e.g., Q² , OH-, CO₃²-, PO₄³⁻, SO₄²⁻, NO₃-, Si₂O₃²⁻, SiO₃²⁻, Ch, F⁻, S²⁻, or the like). A synthetic method of the inorganic particles can be a known method, and can be either a gas-liquid method or a liquid-liquid method. An example of the gas-liquid method is a carbon dioxide process in which, for example, magnesium carbonate can be synthesized by reacting magnesium hydroxide and carbonic acid gas. Examples of the liquid-liquid method include a method in which an acid (such as hydrochloric acid or sulfuric acid) and a base (such as sodium hydroxide or potassium hydroxide) are reacted by neutralization; a method in which an inorganic salt is reacted with an acid or a base; or a method in which inorganic salts are reacted with each other. For example, barium sulfate can be obtained by reacting barium hydroxide with sulfuric acid, aluminum hydroxide can be obtained by reacting aluminum sulfate with sodium hydroxide, and inorganic particles in which calcium and aluminum are complexed can be obtained by reacting calcium carbonate with aluminum sulfate. In synthesizing inorganic particles in this manner, any metal or metal compound can coexist in a reaction liquid. In such a case, the metal or metal compound can be efficiently incorporated into and complexed with the inorganic particles. For example, in a case where phosphoric acid is added to calcium carbonate to synthesize calcium phosphate, composite particles of calcium phosphate and titanium can be obtained by causing titanium dioxide to coexist in the reaction liquid.

### Synthesis of composite

According to an aspect of the present invention, the composite can be obtained by synthesizing inorganic particles in the presence of fibers. This is because the fiber surfaces serve as a suitable site for the inorganic particles to be deposited, and thus the synthesis of the composite of inorganic particles and fibers is facilitated.

The process for synthesizing the composite in accordance with an aspect of the present invention essentially includes the synthesis of inorganic particles in a solution containing fibers. For example, the composite can be synthesized by stirring and mixing a solution containing fibers and a precursor of inorganic particles in an open reaction tank, or the composite can be synthesized by injecting an aqueous suspension containing fibers and a precursor of inorganic particles into a reactor vessel. It is possible that, when the aqueous suspension of the precursor of inorganic substance is injected into the reactor vessel, cavitation bubbles are generated, and the inorganic particles are synthesized in the presence of the cavitation bubbles.

In a case where one of precursors of inorganic particles is alkaline, the fibers can be swollen by dispersing the fibers in advance in a solution of the alkaline precursor, so that the composite of inorganic particles and fibers can be efficiently obtained. The reaction can be started after swelling of the fibers is facilitated by stirring the mixture for 15 minutes or more after mixing, or the reaction can be started immediately after the mixing. In a case where a substance such as aluminum sulfate (aluminum sulfide, polyaluminum chloride, or the like) that is more likely to interact with cellulose is used as a part of the precursor of inorganic particles, a ratio at which the inorganic particles are fixed to the fibers can be improved by mixing the aluminum sulfate with the fibers in advance.

According to an aspect of the present invention, a liquid can be injected under a condition in which cavitation bubbles are generated in the reactor vessel, or a liquid can be injected under a condition in which cavitation bubbles are not generated. In any case, the reactor vessel is preferably a pressure vessel. The pressure vessel used in an aspect of the present invention refers to a container to which pressure of 0.005 MPa or more can be applied. Under the condition in which cavitation bubbles are not generated, it is preferable that the pressure in the pressure vessel is 0.005 MPa or more and 0.9 MPa or less in static pressure.

As one preferable aspect, an average primary particle diameter of the inorganic particles in the composite in accordance with an aspect of the present invention can be, for example, 1 pm or less. Alternatively, it is possible to use inorganic particles having an average primary particle diameter of 500 nm or less, inorganic particles having an average primary particle diameter of 200 nm or less, inorganic particles having an average primary particle diameter of 100 nm or less, and inorganic particles having an average primary particle diameter of 50 nm or less. The average primary particle diameter of inorganic particles can be 10 nm or more. Note that the average primary particle diameter can be measured by use of a laser diffraction particle size distribution measuring device or electron micrography.

According to an aspect of the present invention, when the composite is produced, various known assistants can be further added. For example, a chelating agent can be added. Specific examples of the chelating agent include polyhydroxy carboxylic acid such as citric acid, malic acid, and tartaric acid; dicarboxylic acid such as oxalic acid; saccharic acid such as gluconic acid; aminopolycarboxylic acid such as iminodiacetic acid and ethylenediaminetetraacetic acid and alkali metal salts thereof; alkali metal salts of polyphosphoric acid such as hexametaphosphoric acid and tripolyphosphoric acid; amino acid such as glutamic acid and aspartic acid, and alkali metal salts thereof; ketones such as acetylacetone, methyl acetoacetate, allyl acetoacetate; saccharides such as cane sugar; polyol such as sorbitol; and the like. Moreover, it is possible to add a surface treatment agent. Examples of the surface treatment agent include saturated fatty acid such as palmitic acid and stearic acid, unsaturated fatty acid such as oleic acid and linoleic acid, resin acid such as alicyclic carboxylic acid and abietic acid, and salts, esters, and ethers thereof, an alcohol-based activator, sorbitan fatty acid esters, an amide-based surfactant, an amine-based surfactant, polyoxyalkylene alkylethers, polyoxyethylene nonylphenyl ether, sodium alpha olefin sulfonate, long-chain alkyl amino acid, amine oxide, alkylamine, quaternary ammonium salt, aminocarboxylic acid, phosphonic acid, polyvalent carboxylic acid, condensed phosphoric acid, and the like. Moreover, a dispersing agent can be optionally used. Examples of the dispersing agent include sodium polyacrylate, sucrose fatty acid ester, glycerin fatty acid ester, acrylic acid-maleic acid copolymer ammonium salt, a methacrylic acid-naphthoxypolyethylene glycol acrylate copolymer, methacrylic acid-polyethyleneglycol monomethacrylate copolymer ammonium salt, polyethyleneglycol monoacrylate, and the like. These can be used solely, or two or more of these can be used in combination. A point in time of adding such an additive can be prior to or after the synthetic reaction. Such an additive can be added in an amount of preferably 0.001% by weight to 20% by weight, more preferably 0.1% by weight to 10% by weight, with respect to the inorganic particles.

In a case where the composite is synthesized in an aspect of the present invention, the reaction condition is not particularly limited, and can be appropriately set depending on the purpose of use. For example, a temperature of the synthetic reaction can be 0°C to 90°C, preferably 10°C to 80°C, more preferably 50°C to 70°C, particularly preferably approximately 60°C. In regard to the reaction temperature, the reaction temperature of the reaction liquid can be controlled by a temperature adjusting device. In a case where a temperature is low, reaction efficiency decreases and a cost increases, while a temperature exceeding 90°C tends to generate a large number of coarse inorganic particles.

According to an aspect of the present invention, the reactions can be batch reaction or consecutive reaction. Generally, it is preferable to carry out a batch reaction step in view of convenience of discharging the residue after reaction. A scale of the reaction is not particularly limited, and the reaction can be carried out on a scale of 100 L or less, or can be carried out on a scale of more than 100 L. A size of the reactor vessel can be, for example, approximately 10 L to 100 L, or can be approximately 100 L to 1000 L.

Further, the reaction can be controlled, for example, by monitoring pH of the reaction liquid. In a case of carbonation reaction of calcium carbonate, the reaction can be carried out until pH reaches, for example, below pH9, preferably below pH8, more preferably around pH7, depending on a pH profile of the reaction liquid.

The reaction can be controlled also by monitoring an electric conductivity of the reaction liquid. In the case of the carbonation reaction of calcium carbonate, for example, it is preferable to carry out carbonation reaction until the electric conductivity drops to 1 mS/cm or less.

Furthermore, the reaction can be controlled simply by adjusting a reaction time. Specifically, the reaction can be controlled by adjusting a residence time of a reactant in the reaction tank. Alternatively, according to an aspect of the present invention, the reaction can be controlled by stirring the reaction liquid in the reaction tank or by carrying out the reaction in multiple stages.

A weight ratio between fibers and inorganic particles can be 5/95 to 95/5, and can be 10/90 to 90/10, 20/80 to 80/20, 30/70 to 70/30, 40/60 to 60/40.

According to an aspect of the present invention, the composite which is a reaction product is obtained as a suspension. Therefore, optionally, the composite can be stored in a storage tank, and the composite can be subjected to processes such as concentration, dehydration, pulverization, classification, aging, and dispersion. These processes can be carried out by publicly known steps, and can be appropriately determined in view of a purpose of use, energy efficiency, and the like. For example, the concentration and dehydration process is carried out using a centrifugal hydroextractor, a sedimentation concentrator, or the like. Examples of the centrifugal hydroextractor include a decanter, a screw decanter, and the like. In a case where a filtering machine or a hydroextractor is used, a type of the filtering machine or the hydroextractor is not particularly limited, and a commonly used type can be used. For example, it is possible to use a pressurizing type hydroextractor such as a filter press, a drum filter, a belt press, or a tube press, or a vacuum drum hydroextractor such as an Oliver filter as appropriate to form a calcium carbonate cake. Examples of a pulverizing method include a ball mill, a sand grinder mill, an impact mill, a high-pressure homogenizer, a low-pressure homogenizer, a Dinomill, an ultrasonic mill, a Kanda grinder, an attritor, a stone mill, a vibrating mill, a cutter mill, a jet mill, a disintegrator, a beating machine, a short-screw extruder, a twin-screw extruder, an ultrasonic stirrer, a household juicer mixer, and the like. Examples of a classification method include a sieve such as a mesh, a slit or a round hole screen of an outward type or an inward type, a vibrating screen, a heavy foreign matter cleaner, a light foreign matter cleaner, a reverse cleaner, a sieving tester, and the like. Examples of a dispersion method include a high speed disperser, a low speed kneader, and the like.

The composite obtained by an aspect of the present invention can be mixed in a filler or a pigment in a suspension form without being completely dehydrated, or can be dried to be powder. In this case, a dryer is not particularly limited and, for example, an airflow dryer, a band dryer, a spray dryer, or the like can be suitably used.

According to an aspect of the present invention, water is used in preparation of a suspension and the like. As the water, normal tap water, industrial water, groundwater, well water, or the like can be used, and ion-exchanged water, distilled water, ultrapure water, industrial wastewater, and water obtained during the production step can be suitably used.

The composite obtained by an aspect of the present invention can be reformed by a known method. For example, in a certain aspect, a surface of the composite can be hydrophobized to enhance miscibility with resin and the like.

According to the composite of fibers in accordance with an aspect of the present invention, 15% or more of the fiber surface is covered with inorganic particles. In a case where the fiber surface is covered with such an area ratio, a characteristic attributable to the inorganic particles is greatly brought about, while a characteristic attributable to the fiber surface becomes small.

According to an aspect of the present invention, fibers and inorganic particles do not merely mixedly exist but fibers and inorganic particles are bonded together to some extent by a hydrogen bond or the like in the composite of fibers and inorganic particles. Therefore, the inorganic particles are less likely to fall off even by the disaggregation process. A strength of the bond between fibers and inorganic particles in the composite can be evaluated, for example, by a numerical value of ash yield (%), i.e., (ash content in sheet ÷ ash content of composite before disintegration) ×100. Specifically, after disintegration for 5 minutes with a standard disintegrator defined in JIS P 8220-1: 2012 while adjusting a solid concentration to 0.2% by dispersing the composite in water, an ash yield of a sheet obtained by using 150-mesh wires according to JIS P 8222: 1998 can be used for evaluation. In a preferable aspect, the ash yield is not less than 20% by mass and, in a more preferable aspect, the ash yield is not less than 50% by mass.

### Form of composite

An aspect of the present invention includes the composite of fibers and inorganic particles, and the composite is used in the form of aqueous suspension, of pulp, of sheet, of powder, of granules, of microspheres, of pellets, of molded product, or of foam.

In this case, as one preferable aspect, a product containing the composite of fibers and inorganic particles can be produced by a method that includes a step of synthesizing the composite of fibers and inorganic particles by synthesizing inorganic particles in a solution in the presence of fibers, and a step of adjusting a water content of the composite of fibers and inorganic particles.

In the step of adjusting the water content, a centrifugal hydroextractor, a sedimentation concentrator, a solid-liquid separator, or the like is used as a device for adjusting the water content. Examples of the solid-liquid separator include concentration/dehydration machines such as a decanter, a DNT washer, a screw decanter, and a FUNDABAC filter, pressurizing type hydroextractors such as a filter press, a compact washer, a drum filter, a belt press, and a tube press, and vacuum drum hydroextractors such as an Oliver filter.

In the step of adjusting the water content of the composite of fibers and inorganic particles, an aqueous suspension containing the composite of fibers and inorganic particles can be obtained by adjusting the water content to not less than 90% by mass and not more than 99% by mass. In this case, the water content can be adjusted to not less than 92% by mass and not more than 97% by mass, and the water content can be adjusted to not less than 94% by mass and not more than 95% by mass.

By adjusting the water content to not less than 10% by mass and not more than 90% by mass, pulp containing the composite of fibers and inorganic particles can be produced. In this case, the water content can be adjusted to not less than 20% by mass and not more than 80% by mass, or the water content can be adjusted to not less than 30% by mass and not more than 60% by mass.

Further, by adjusting the water content to less than 10% by mass, pulp containing the composite of fibers and inorganic particles can be produced. In this case, the water content can be adjusted to not less than 1% by mass and not more than 8% by mass, and the water content can be adjusted to not less than 3% by mass and not more than 6% by mass.

As one preferable aspect, a product containing the composite of fibers and inorganic particles can be produced by a method that includes a step of synthesizing the composite of fibers and inorganic particles by synthesizing inorganic particles in a solution in the presence of fibers, and a step of adjusting a particle diameter of the composite of fibers and inorganic particles.

In the step of adjusting the particle diameter of the composite of fibers and inorganic particles, the particle diameter can be confirmed by observation with an electron microscope or by laser diffraction particle size distribution measurement. In addition, inorganic particles having various sizes and shapes can be complexed with fibers by adjusting the condition for synthesizing inorganic particles.

Examples of a method for adjusting the particle diameter of the composite of fibers and inorganic particles include a ball mill, a sand grinder mill, an impact mill, a high-pressure homogenizer, a low-pressure homogenizer, a Dinomill, an ultrasonic mill, a Kanda grinder, an attritor, a stone mill, a vibrating mill, a cutter mill, a jet mill, a disintegrator, a beating machine, a short-screw extruder, a twin-screw extruder, an ultrasonic stirrer, a household juicer mixer, a roller compactor and the like.

In the step of adjusting the particle diameter of the composite of fibers and inorganic particles, powder containing the composite of fibers and inorganic particles can be produced by adjusting the average particle diameter of the composite to less than 100 µm. Preferably, the average particle diameter of the composite can be 1 pm or more and less than 90 pm, or the average particle diameter of the composite can be 10 pm or more and less than 80 pm.

In the step of adjusting the particle diameter of the composite of fibers and inorganic particles, microspheres containing the composite of fibers and inorganic particles can be produced by adjusting the average particle diameter of the composite to 100 pm or more and less than 1000 pm. Preferably, the average particle diameter of the composite can be 200 pm or more and less than 800 pm, or the average particle diameter of the composite can be 300 pm or more and less than 600 pm.

In the step of adjusting the average particle diameter of the composite of fibers and inorganic particles, granules containing the composite of fibers and inorganic particles can be produced by adjusting the average particle diameter of the composite to 1 mm or more and less than 10 mm. Preferably, the average particle diameter of the composite can be 2 mm or more and less than 8 mm, or the average particle diameter of the composite can be 3 mm or more and less than 6 mm.

As one preferable aspect, pellets containing the composite of fibers and inorganic particles can be produced by synthesizing the composite of fibers and inorganic particles by synthesizing inorganic particles in a solution in the presence of fibers, and then pelletizing the composite of fibers and inorganic particles. Examples of a pelletizing machine include a pelletizer.

The composite of fibers and inorganic particles can be pelletized after adjusting the water content of the composite to not less than 45% by mass and not more than 85% by mass, preferably not less than 50% by mass and not more than 70% by mass by solid-liquid separation with use of the above described solid-liquid separator.

As one preferable aspect, a molded product containing the composite of fibers and inorganic particles can be produced by the step of synthesizing the composite of fibers and inorganic particles by synthesizing the inorganic particles in a solution in the presence of fibers, and a step of pouring the composite into a mold and dehydrating the composite.

As one preferable aspect, foam containing the composite of fibers and inorganic particles can be produced by the step of synthesizing the composite of fibers and inorganic particles by synthesizing the inorganic particles in a solution in the presence of fibers, and a step of subjecting the water content of the composite to solid-liquid separation with use of a solid-liquid separator, and then stirring the composite with use of a stirrer.

Examples of a device used in the stirring include a homogenizer, a disperser, and the like. A stirring speed can be 6000 rpm or more and less than 10000 rpm, or 7000 rpm or more and less than 9000 rpm.

A dryer for drying the composite of fibers and inorganic particles is not particularly limited and, for example, an airflow dryer, a band dryer, a spray dryer, or the like can be suitably used.

### Applications of composite

The composite obtained by an aspect of the present invention can be used for a wide variety of applications. Examples of the applications include paper, fibers, cellulosic composite materials, filter materials, paints, plastics and other resins, rubbers, elastomers, ceramics, glasses, tires, building materials (such as asphalts, asbestos, cement, boards, concrete, bricks, tiles, plywood, and fiber boards), various carriers (such as catalytic carriers, pharmaceutical carriers, agrochemical carriers, and microbial carriers), adsorbents (for removing impurities, deodorization, dehumidification, and the like), wrinkle inhibitors, clays, abrasives, modifiers, repairing materials, heat insulating materials, dampproof materials, water-repellent materials, waterproof materials, light shielding materials, sealants, shielding materials, insect repellents, adhesive agents, inks, cosmetics, medical materials, paste materials, discoloration inhibitor, food additives, tablet excipients, dispersing agents, shape retaining agents, water retaining agents, filtration assistants, essential oil materials, oil processing agents, oil modifiers, radiowave absorptive materials, insulators, sound insulating materials, vibration proofing materials, semiconductor sealing material, radiation-proof materials, cosmetics, fertilizers, feeds, perfumes, additives for paints and adhesive agents, flame retardant materials, hygiene products (such as disposable diapers, sanitary napkins, incontinent pads, and breast milk pads), and the like. In addition, the composite can be used in various types of filler, coating agents, and the like in the above described applications. The composite in accordance with an aspect of the present invention can be used in paper making applications. Examples of such paper making applications include printing paper, newspaper, inkjet paper, PPC paper, kraft paper, fine paper, coated paper, fine coating paper, wrapping paper, tissue paper, colored fine paper, cast coated paper, noncarbon paper, label paper, thermal paper, various kinds of fancy paper, water-soluble paper, release paper, process paper, base sheet for wallpaper, incombustible paper, flame retardant paper, base sheet for laminated plate, printed electronics paper, battery separator, cushion paper, tracing paper, impregnated paper, ODP paper, building paper, decorative material paper, envelope paper, tape paper, heat exchanging paper, chemical fiber paper, sterilization paper, waterproof paper, oil-proof paper, heat-resistant paper, photocatalytic paper, facial tissue (such as oil blotting paper), various kinds of sanitary paper (such as toilet paper, tissue, wiper, diaper, and sanitary goods), cigarette paper, paperboard (such as linerboard, corrugating medium, and white paperboard), paper plate base sheet, paper cup base sheet, baking paper, sand paper, synthetic paper, and the like. That is, according to an aspect of the present invention, it is possible to obtain the composite of inorganic particles and fibers having a small primary particle diameter and a small particle size distribution. Therefore, it is possible to bring about a characteristic which is different from that of a conventional inorganic filler having a particle diameter of more than 1 pm. Further, in a case where inorganic particles are complexed with fibers, the inorganic particles are more likely to remain in a sheet and it is also possible to obtain a sheet in which the inorganic particles are not aggregated but are uniformly dispersed, unlike a case in which inorganic particles are simply mixed with fibers. It is clear from a result of electron microscopy that the inorganic particles in a preferable aspect of the present invention are not only fixed to outer surfaces of fibers and to the inner side of lumens, but also generated on the inner side of microfibrils.

In a case where the composite obtained by an aspect of the present invention is used, particles generally called inorganic filler and organic filler, and various types of fibers can be used in combination. Examples of the inorganic filler include calcium carbonate (light calcium carbonate, heavy calcium carbonate), magnesium carbonate, barium carbonate, aluminum hydroxide, calcium hydroxide, magnesium hydroxide, zinc hydroxide, clay (kaoline, fired kaolin, Delaminated Kaolin), talc, zinc oxide, zinc stearate, titanium dioxide, silica composed of sodium silicate and mineral acid (white carbon, silica/calcium carbonate composite, silica/titanium dioxide composite), white clay, bentonite, diatomaceous earth, calcium sulfate, zeolite, an inorganic filler that is obtained by recycling ash content obtained from a deinking process, an inorganic filler obtained by forming the composite with silica or calcium carbonate during the process of recycling ash content obtained from the deinking process. As the calcium carbonate-silica complex, in addition to the complexes of calcium carbonate and/or light calcium carbonate and silica, amorphous silica such as white carbon can be used in combination. Examples of the organic filler include urea-formalin resin, polystyrene resin, phenol resin, hollow fine particles, an acrylamide composite, wood-derived substances (filaments, microfibrils, powdered kenaf), denatured insoluble starch, ungelatinized starch, and the like. As the fibers, not only natural fibers such as cellulose, but also synthetic fibers that are artificially synthesized from a raw material such as petroleum, regenerated fibers (semi-synthetic fibers) such as rayon and lyocell, and inorganic fibers can be used without restrictions. Examples of the natural fibers include, in addition to the above ones, protein-based fibers such as wool fibers, silk fibers, and collagenous fibers, complex sugar chain fibers such as chitin/chitosan fibers and algin fibers, and the like. Examples of the raw material of cellulose-based fibers include pulp fibers (wood pulp and non-wood pulp), bacterial cellulose, animal-derived cellulose such as ascidian, and algae, and the wood pulp can be produced by converting wood feedstock into pulp. Examples of the wood feedstock include coniferous trees such as Japanese red pine, Japanese black pine, Sakhalin fir, Yezo spruce, *Pinus koraiensis,* Japanese larch, Japanese fir, Southern Japanese hemlock, Japanese cedar, Hinoki cypress, Japanese larch, *Abies veitchii,* spruce, Hinoki cypress leaf, Douglas fir, hemlock, white fir, spruce, Balsam fir, cedar, pine, Merkusii pine, and Radiata pine, and admixtures thereof; and broadleaf trees such as Japanese beech, birch, Japanese alder, oak, *Machilus thunbergii, Castanopsis,* Japanese white birch, Japanese aspen, poplar, Japanese ash, Japanese poplar, eucalyptus, mangrove, lauan, and acacia, and admixtures thereof. A method for converting the wood feedstock into pulp is not particularly limited and, for example, a pulping method commonly used in the paper industry can be employed. Wood pulp can be classified depending on the pulping method, for example, chemical pulp digested by a kraft method, a sulfite method, the soda method, a polysulfide method, or the like; mechanical pulp obtained by pulping with mechanical force such as a refiner, a grinder, or the like; semi-chemical pulp obtained by pulping with mechanical force after pretreatment with chemicals; wastepaper pulp; deinked pulp; and the like. The wood pulp can be unbleached (i.e., before bleaching) or bleached (i.e., after bleaching). Examples of the non-wood pulp include cotton, hemp, sisal hemp, Manila hemp, flax, straw, bamboo, bagasse, kenaf, sugar cane, corn, rice straw, paper mulberry, paper bush, and the like. Wood pulp and non-wood pulp can be either unbeaten or beaten. These cellulose raw materials can also be further processed to be used as pulverized cellulose such as powdered cellulose, chemically denatured cellulose such as oxidized cellulose, and cellulose nanofibers: CNF (microfibrillated cellulose: MFC, TEMPO-oxidized CNF, phosphoric acid esterified CNF, carboxymethylated CNF, mechanically pulverized CNF). Examples of the synthetic fibers include polyester, polyamide, polyolefin, and acrylic fibers. Examples of the semi-synthetic fibers include rayon and acetate, and the like. Examples of the inorganic fibers include glass fibers, carbon fibers, various metal fibers, and the like. The above exemplified fibers can be used alone or two or more types of those fibers can be used in combination.

In addition, any of various organic substances such as a polymer and/or any of various inorganic substances such as a pigment can be later added to a molded product of the composite.

### [Additional Remarks]

As above described, an aspect of the present invention includes the following features:
(1) A method for producing a composite of inorganic particles and fibers, the method including the steps of: producing the composite of the inorganic particles and the fibers by synthesizing the inorganic particles in a solution containing the fibers; and processing the composite.
(2) The method described in (1), in which the processing step is a step of forming the composite into a sheet.
(3) The method described in (1), further including the step of forming the composite into a sheet before carrying out the processing step.
(4) The method described in any one of (1) through (3), in which the processing step is a coating step.
(5) The method described in any one of (1) through (3), in which the processing step is a laminating step.
(6) The method described in any one of (1) through (3), in which the processing step is a printing step.
(7) The method described in any one of (1) through (3), in which the processing step is a step of bonding the composite and a material together, the material being identical with the composite or being different from the composite.
(8) The method described in (7), in which the bonding step is a step of bonding a nonwoven fabric and the composite together.
(9) A laminate including: a layer containing a composite of inorganic particles and fibers; and a coating layer containing a pigment and an adhesive agent; or a coating layer containing an adhesive agent.
(10) A laminate including: a layer containing a composite of inorganic particles and fibers; and a lamination layer.
(11) A laminate including: a layer containing a composite of inorganic particles and fibers; and a printed layer.
(12) A laminate including: a layer containing a composite of inorganic particles and fibers; and a layer containing a nonwoven fabric that contains cellulosic fibers and synthetic fibers.

### [Examples]

The present invention will be described below in more detail with reference to specific experiment examples. Note, however, that the present invention is not limited to such experiment examples. In addition, unless otherwise specified in this specification, concentrations, parts, and the like are based on the weight, and numerical ranges are described as including endpoints thereof.

### Example 1: Laminate containing a composite of magnesium carbonate particles and fibers and a coating layer containing a surface treatment solution

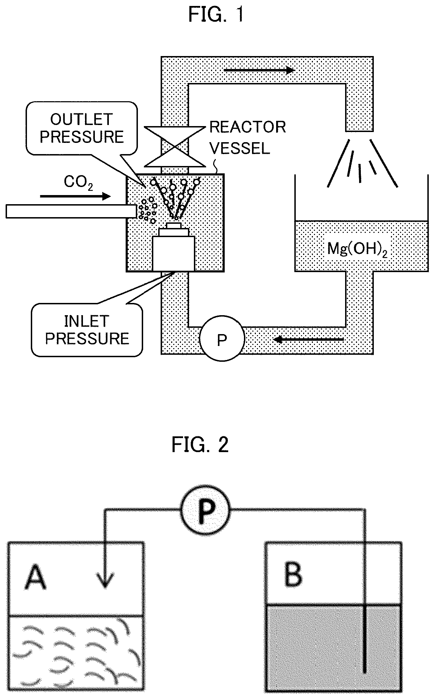

An aqueous suspension containing 140 g of magnesium hydroxide (Wako Pure Chemical Industries, Ltd.) and 140 g of leaf bleached kraft pulp (LBKP, CSF: 370 ml, average fiber length: 0.75 mm) was prepared. 14 L of the aqueous suspension was put in a 45-L cavitation device illustrated in Fig. 1, and a composite of magnesium carbonate fine particles and fibers was synthesized by a carbon dioxide process by blowing carbonic acid gas into a reactor vessel while circulating a reaction solution. A reaction temperature was approximately 36°C, the carbonic acid gas was supplied from a commercially available liquefied gas, and a blowing rate of the carbonic acid gas was 4 L/min. When pH of the reaction liquid became approximately 7.8, introduction of CO₂ was stopped (pH before reaction was approximately 9.5), followed by generation of cavitation and circulation of slurry in the device for 30 minutes to obtain a composite of magnesium carbonate fine particles and fibers (a concentration of the composite in the slurry: 4% by weight). A weight ratio of fibers:inorganic particles in the obtained composite was 45:55. Here, the weight ratio was calculated based on an ash content obtained from a ratio between a weight of ash remaining and an original solid content after the composite was heated at 525°C for approximately 2 hours (JIS P 8251: 2003).

In synthesizing the composite, cavitation bubbles were generated in the reactor vessel by circulating the reaction solution and injecting the reaction solution into the reactor vessel as shown in Fig. 1. Specifically, cavitation bubbles were generated by injecting the reaction solution at a high pressure through a nozzle (nozzle diameter: 1.5 mm), and a jet velocity was approximately 70 m/s, inlet pressure (upstream pressure) was 7 MPa, and outlet pressure (downstream pressure) was 0.3 MPa.

To the composite (a concentration of the composite in the slurry: 1% by weight) thus obtained, 100 ppm (with respect to solid content) of a cationic retention aid (ND300, HYMO Co., Ltd) and 100 ppm (with respect to solid content) of an anionic retention aid (FA230, HYMO Co., Ltd) were added to prepare paper stuff slurry. Then, a sheet was produced from the paper stuff slurry using a Fourdrinier machine at a rate of 10 m/min. Moreover, as a control, 100 ppm (with respect to solid content) of a cationic retention aid (ND300, HYMO Co., Ltd) and 100 ppm (with respect to solid content) of an anionic retention aid (FA230, HYMO Co., Ltd) were added to pulp slurry (LBKP/NBKP = 8/2, CSF = 380 mL, average fiber length: 1.5 mm) to produce a composite sheet (having a water content of 8.0% by mass) using a Fourdrinier machine. A weight ratio of fibers:inorganic particles in the obtained composite was 56:44.

Water was added to undenatured corn starch (manufactured by Nihon Shokuhin Kako Co., Ltd., Nisshoku corn starch Y) and stirred to prepare starch slurry having a solid concentration of 25% by weight. Ammonium persulfate (APS) was added to the starch slurry in an amount of 0.05% by weight with respect to starch solid content. Then, the mixture was heated to 150°C in a jet cooker, and kept steamed for 3 minutes with a holding coil to obtain a starch glue solution. Then, 5% NaOH was added to the obtained starch glue solution to adjust the pH to 7.0, and warm water at 50°C was added so that a starch concentration became 12% by weight, and thus a surface treatment solution was obtained.

The surface treatment solution prepared above was applied to both surfaces of the composite sheet using a rod metering size press at 800 m/min so that the surface treatment solution is applied in an amount of approximately 1 g/m² per surface.

### Example 2: Laminate containing a composite of magnesium carbonate particles and fibers and a coating layer containing a surface treatment solution (no CV)

A laminate was prepared in a manner similar to that of Example 1, except that a 3-L stainless steel container was used as the reactor vessel, a used amount of pulp was 20 g, a blowing rate of carbonic acid gas was 0.57 L/min, and carbonation reaction was carried out while stirring the reaction solution with a three-one motor (800 rpm) in a water bath at 35°C. A weight ratio of fibers:inorganic particles in the obtained composite was 45:55.

### Example 3: Laminate containing a composite of magnesium carbonate fine particles and fibers and a coating layer containing a pigment coating solution

A laminate was prepared in a manner similar to that of Example 1, except that a pigment coating solution prepared as follows was used instead of the surface treatment solution.

Water was added to undenatured corn starch (manufactured by Nihon Shokuhin Kako Co., Ltd., Nisshoku corn starch Y) and stirred to prepare starch slurry having a solid concentration of 25% by weight. Ammonium persulfate (APS) was added to the starch slurry in an amount of 0.05% by weight with respect to starch solid content. Then, the mixture was heated to 150°C in a jet cooker, and kept steamed for 3 minutes with a holding coil to obtain a starch glue solution. Then, 5% NaOH was added to the obtained starch glue solution to adjust the pH to 7.0, and warm water at 50°C was added so that a starch concentration became 12% by weight, and thus a pigment coating solution was obtained.

### Example 4: Laminate containing a composite of barium sulfate particles and fibers and a coating layer containing a pigment coating solution

A laminate was prepared in a manner similar to that of Example 3, except that a composite of barium sulfate particles and fibers synthesized as follows was used instead of the composite of magnesium carbonate fine particles and fibers.

After mixing 1% by weight of pulp slurry (LBKP/NBKP = 8/2, 500 g) with barium hydroxide octahydrate (Wako Pure Chemical Industries, Ltd., 5.82 g) using a three-one motor (1000 rpm), sulfuric acid (Wako Pure Chemical Industries, Ltd., 2.1 g) was dripped. After the dripping had been finished, the stirring was continued for 30 minutes, and thus a composite of barium sulfate particles and fibers (a concentration of the composite in the slurry: 4% by weight) was obtained. A weight ratio of fibers:inorganic particles in the obtained composite was 56:44.

### Example 5: Laminate containing a composite of barium sulfate particles and aramid fibers and a coating layer containing a pigment coating solution

A laminate was prepared in a manner similar to that of Example 4, except that slurry of 0.8% by weight of aramid fibers (Twaron RD-1094, Teijin, 625 g) was used as a fiber component. A weight ratio of fibers:inorganic particles in the obtained composite was 55:45.

The obtained laminates (in Examples 1 through 5) had higher strength and superior printability, as compared with a composite sheet (in Comparative Example 1) including no coating layer.

### Example 6: Laminate containing a composite of magnesium carbonate particles and fibers and a lamination layer

A laminate was prepared in a manner similar to that of Example 1, except that a lamination layer was provided as follows instead of the coating layer.

With use of an extruder provided with a T die, extruding lamination was carried out to bond the composite sheet obtained in Example 1 and low density polyethylene (manufactured by Japan Polyethylene Corporation, LC602A, density: 0.919 g/cm³, melting point: 107°C) together at a melting temperature of 300°C so that a thickness became 30 pm. The extruded sheet was immediately pressed and pressure bonded with cooling rolls and nip rolls (having hardness of 70 degrees) under linear pressure of 15 kgf/cm.

The obtained laminate had superior waterproofness, as compared with the composite sheet (in Comparative Example 1) including no lamination layer.

### Example 7: Laminate containing a composite of magnesium carbonate particles and fibers and a printed layer

A laminate was prepared in a manner similar to that of Example 1, except that a printed layer was provided as follows instead of the coating layer.

High viscosity AF ink, which was ecological ink for offset printing and was manufactured by TOYO INK CO., LTD., was printed on the composite with use of an offset rotary press (Toshiba offset rotary press: OA-4B2T-600).

The obtained laminate had superior beauty, as compared with the composite sheet (in Comparative Example 1) including no printed layer.

### Example 8: Laminate containing a composite of magnesium carbonate particles and fibers and a layer containing nonwoven fabric

A laminate was prepared in a manner similar to that of Example 1, except that a layer containing a nonwoven fabric produced as follows was bonded to the composite sheet, instead of the coating layer.

Pulp which was cellulosic fibers (NBKP having freeness of 600 ml; manufactured by Nippon Paper Industries, Co. Ltd.) was mixed with polyester fibers which were synthetic fibers (product name: TEPYRUS TT04N, cut length: 5 mm, manufactured by Teijin) and with a wet paper strengthening agent (product name: WS4020, manufactured by SEIKO PMC CORPORATION) with a ratio indicated in Table 1, and water was further added to prepare a water dispersion body having a solid concentration of 0.5% by mass. In Table 1, the mixing ratios of fibers and the wet paper strengthening agent are values with respect to the total amount of all fibers.

The water dispersion body was put in a round-type handmade paper machine, dehydrated with use of a pressing machine, and then dried at 85°C with use of a cylinder dryer. Thus, a round nonwoven fabric having a diameter of approximately 16 cm was prepared.

### Example 9: Laminate containing a composite of hydrotalcite and fibers and a layer containing nonwoven fabric

A laminate was prepared in a manner similar to that of Example 7, except that a composite of hydrotalcite and fibers synthesized as follows was used instead of the composite of magnesium carbonate and fibers.

### (1) Preparation of alkaline solution and acid solution

A solution for synthesizing hydrotalcite (HT) was prepared. As an alkaline solution (solution A), a mixed aqueous solution was prepared which contained NazCOs (Wako Pure Chemical Industries, Ltd.) and NaOH (Wako Pure Chemical Industries, Ltd.) As acid solutions (solutions B), a mixed aqueous solution was prepared which contained MgCl₂ (Wako Pure Chemical Industries, Ltd.) and AlCl₃ (Wako Pure Chemical Industries, Ltd.), and a mixed aqueous solution was prepared which contained ZnCl₂ (Wako Pure Chemical Industries, Ltd.) and AlCl₃ (Wako Pure Chemical Industries, Ltd.)
- Alkaline solution (solution A, Na₂CO₃ concentration: 0.05 M, NaOH concentration: 0.8 M)
- Acid solution (solution B, Mg-base, MgCl₂ concentration: 0.3 M, AlCl₃ concentration: 0.1 M)
- Acid solution (solution B, Zn-base, ZnCl₂ concentration: 0.3 M, AlCl₃ concentration: 0.1 M)

### (2) Synthesis of composite

The alkaline solution was put in a 10-L reactor vessel, and the acid solution (Mg-base) was dripped while the alkaline solution was stirred, and thus hydrotalcite fine particles (Mg₆Al₂(OH)16CO₃·4H₂O) were synthesized. A reaction temperature was 60°C, and a drip rate was 15 ml/min, and the dripping was stopped when the pH of the reaction liquid reached approximately pH 7. After the dripping was finished, the reaction liquid was stirred for 30 minutes and washed with approximately 10 times as much water to remove salts.

As fibers to be complexed, cellulosic fibers were used. Specifically, pulp fibers were used which contained leaf bleached kraft pulp (LBKP, manufactured by Nippon Paper Industries, Co. Ltd.) and needle bleached kraft pulp (NBKP, manufactured by Nippon Paper Industries, Co. Ltd.) with a weight ratio of 8:2 and in which a Canadian standard freeness was adjusted to 390 ml with use of a single disk refiner (SDR).

The pulp fibers were added to the alkaline solution, and thus an aqueous suspension containing pulp fibers (pulp fiber concentration: 1.56% by weight, pH: approximately 12.4) was prepared. The aqueous suspension (having a pulp solid content of 30 g) was put in a 10-L reactor vessel, and the acid solution (Mg-base) was dripped while the aqueous suspension was stirred, and thus hydrotalcite fine particles and fibers were synthesized into a composite. The device as illustrated in Fig. 2 was used, a reaction temperature was 60°C, and a drip rate was 15 ml/min, and the dripping was stopped when the pH of the reaction liquid reached approximately pH 7. After the dripping was finished, the reaction liquid was stirred for 30 minutes and washed with approximately 10 times as much water to remove salts. A weight ratio of fibers: inorganic particles in the obtained composite was 56:44.

### Example 10: Laminate containing a composite of magnesium carbonate particles and fibers

A laminate was prepared in a manner similar to that of Example 1, except that a layer in which composites of magnesium carbonate particles and fibers were bonded together as follows was used instead of the coating layer.

To each of front and back surfaces of waterproof base paper (manufactured by Nippon Paper Industries, Co. Ltd., basis weight of 500 g/m², thickness of 0.76 mm, ash content of 11%), one (1) composite sheet was bonded using a vinyl acetate-based binder, and then the sheets were pressed (4.8 MPa) once with a pressing machine to prepare a laminate.

The laminates (in Examples 8 through 10) in which the composite and the nonwoven fabric were bonded together or the composites were bonded together were superior in durability, as compared with the composite sheet (in Comparative Example 1) including no bonding step.

### Comparative Example 1: Composite of magnesium carbonate particles and fibers

A composite sheet of magnesium carbonate particles and fibers was prepared in a manner similar to that of Example 1, except that a coating layer containing a surface treatment solution was not provided.

The types of used inorganic particles and used fibers, and processing steps are indicated in Table 1.

**[Table 1]**

| | Inorganic particles | Fibers | Processing step |
|---|---|---|---|
| Example 1 | Magnesium carbonate | LBKP | Coating step (clear coating solution) |
| Example 2 | Magnesium carbonate | LBKP | Coating step (clear coating solution) |
| Example 3 | Magnesium carbonate | LBKP | Coating step (pigment coating solution) |
| Example 4 | Barium sulfate | L/NBKP | Coating step (pigment coating solution) |
| Example 5 | Barium sulfate | Aramid fibers | Coating step (pigment coating solution) |
| Example 6 | Magnesium carbonate | LBKP | Laminating step |
| Example 7 | Magnesium carbonate | LBKP | Printing step |
| Example 8 | Magnesium carbonate | LBKP | Bonding step |
| Example 9 | Hydrotalcite | L/NBKP | Bonding step |
| Example 10 | Magnesium carbonate | LBKP | Bonding step |
| Comparative Example 1 | Magnesium carbonate | LBKP | - |

### (Evaluation)

The effects of the composite sheets obtained in the respective Examples and Comparative Example were analyzed by the following method.

### Evaluation of composite sheet

The properties were evaluated based on the following evaluation procedures.
- Basis weight: JIS P 8124:1998
- Ash content: JIS P 8251:2003
- Surface strength and printability:
   Dry pick in printing with 7 cc of SMX ink (Tack Grade 20, manufactured by TOYO INK CO., LTD.) was checked with use of an RI printing tester (four-color machine, manufactured by Ishikawajima Industrial Machinery Co., Ltd.) Specifically, a state of picking after printing was observed with the naked eye, and evaluation was made in 3 grades (Excellent: 3>2>1: Inferior). The evaluation was made higher as the picking occurred less.
- Waterproofness: Printing was carried out with 7 cc of SMX ink (Tack Grade 20, manufactured by TOYO INK CO., LTD.) with use of the RI printing tester (four-color machine, manufactured by Ishikawajima Industrial Machinery Co., Ltd.) The printed sample was immersed in warm water (tap water, 40°C) and was then taken out from the water after 24 hours, and air dried. The printed portion of the sample after air drying was observed with the naked eye, and was evaluated in 3 grades (Excellent: 3>2>1: Inferior).
- Beauty: Printing was carried out with 7 cc of SMX ink (Tack Grade 20, manufactured by TOYO INK CO., LTD.) with use of the RI printing tester (four-color machine, manufactured by Ishikawajima Industrial Machinery Co., Ltd.) The printed portion of the printed sample was observed with the naked eye, and was evaluated in 3 grades (Excellent: 3>2>1: Inferior).
- Durability: A sphere of 100 g was dropped from a height of 1 m onto each sample, and a sample having a surface that was ruptured was graded as 1 (failed) and a sample having a surface that was not ruptured was graded as 3 (passed).

Table 2 shows the results.

**[Table 2]**

| | Example 1 | Example 2 | Example 3 | Example 4 | Example 5 | Example 6 | Example 7 | Example 8 | Example 9 | Example 10 | Comparative Example 1 |
|---|---|---|---|---|---|---|---|---|---|---|---|
| Basis weight (g/m²) | 100.0 | 100.0 | 100.0 | 100.0 | 100.0 | 100.0 | 100.0 | 100.0 | 100.0 | 100.0 | 100.0 |
| Ash content (%) | 55 | 55 | 55 | 44 | 45 | 55 | 55 | 55 | 55 | 55 | 55 |
| Printability (Surface strength) | 3 | 3 | 3 | 3 | 3 | - | - | - | - | - | 2 |
| Waterproofness | - | - | - | - | - | 3 | - | - | - | - | 1 |
| Beauty | - | - | - | - | - | - | 3 | - | | - | 2 |
| Durability | - | - | - | - | - | - | - | 3 | 3 | 3 | 1 |

As shown in Table 2, the composite sheets of the respective Examples were confirmed to achieve improvement in the intended effectiveness, as compared with the composite sheet of Comparative Example.

## Claims

1. A method for producing a composite of inorganic particles and fibers, said method comprising the steps of:
producing the composite of the inorganic particles and the fibers by synthesizing the inorganic particles in a solution containing the fibers; and
processing the composite,
wherein the inorganic particles are particles of magnesium carbonate, particles of hydrotalcite, particles of barium sulfate, particles of aluminum hydroxide, inorganic particles in which calcium and aluminum are complexed and which is obtained by reacting calcium carbonate with aluminum sulfate, particles of calcium phosphate, or composite particles of calcium phosphate and titanium, and wherein the step of producing the composite of the inorganic particles and the fibers is
(i) a step of synthesizing the composite of the inorganic particles and the fibers by injecting an aqueous suspension, which contains a hydroxide of Mg²⁺ and the fibers, into a reactor vessel through a nozzle while generating cavitation bubbles, and blowing carbonic acid gas into the reactor vessel while circulating the aqueous suspension in the reactor vessel, in a case where the inorganic particles are particles of magnesium carbonate,
(iia) a step of, in a case where the inorganic particles are the particles of hydrotalcite, synthesizing the composite of the inorganic particles and the fibers by dripping an acid solution into an aqueous suspension while stirring the aqueous suspension, the acid solution containing MgCl₂ and AlCl₃, the aqueous suspension containing (a) an alkaline solution containing NaOH and NaaCOs and (b) the fibers,
(iib) a step of, in a case where the inorganic particles are the particles of aluminum hydroxide, reacting aluminum sulfate with sodium hydroxide in the presence of the fibers by a liquid-liquid method,
(iic) a step of, in a case where the inorganic particles are the particles of barium sulfate, reacting barium hydroxide with sulfuric acid in the presence of the fibers by a liquid-liquid method,
(iid) a step of, in a case where the inorganic particles are the inorganic particles in which calcium and aluminum are complexed, reacting calcium carbonate with aluminum sulfate in the presence of the fibers by a liquid-liquid method, or
(iie) a step of, in a case where the inorganic particles are the composite particles of calcium phosphate and titanium, causing titanium dioxide to coexist in a reaction liquid which is obtained to synthesize the calcium phosphate by adding phosphoric acid to calcium carbonate in the presence of the fibers by a liquid-liquid method.

2. The method as set forth in claim 1, wherein the processing step is a step of forming the composite into a sheet.

3. The method as set forth in claim 1, further comprising the step of forming the composite into a sheet before carrying out the processing step.

4. The method as set forth in any one of claims 1 through 3, wherein the processing step is a coating step.

5. The method as set forth in any one of claims 1 through 3, wherein the processing step is a laminating step.

6. The method as set forth in any one of claims 1 through 3, wherein the processing step is a printing step.

7. The method as set forth in any one of claims 1 through 3, wherein the processing step is a step of bonding the composite and a material together, the material being identical with the composite or being different from the composite.

8. The method as set forth in claim 7, wherein the material different from the composite is a nonwoven fabric.

## Patentansprüche

1. Verfahren zur Herstellung eines Verbundstoffs aus anorganischen Partikeln und Fasern, wobei das Verfahren die folgenden Schritte umfasst:
Herstellung des Verbundstoffs aus den anorganischen Partikeln und den Fasern durch Synthetisieren der anorganischen Partikeln in einer die Fasern enthaltenden Lösung; und
Verarbeitung des Verbundstoffs,
wobei die anorganischen Partikeln Partikeln aus Magnesiumcarbonat, Partikeln aus Hydrotalcit, Partikeln aus Bariumsulfat, Partikeln aus Aluminiumhydroxid, anorganische Partikeln, in denen Calcium und Aluminium komplexiert sind und die durch Reaktion von Calciumcarbonat mit Aluminiumsulfat erhalten werden, Partikeln aus Calciumphosphat oder Verbundpartikeln aus Calciumphosphat und Titan sind, und
wobei der Schritt der Herstellung des Verbundstoffs aus den anorganischen Partikeln und den Fasern ist
(i) ein Schritt des Synthetisierens des Verbundstoffs aus den anorganischen Partikeln und den Fasern durch Injizieren einer wässrigen Suspension, die ein Hydroxid von Mg²⁺ und die Fasern enthält, in ein Reaktorgefäß durch eine Düse, während Kavitationsblasen erzeugt werden, und Einblasen von Kohlendioxid in das Reaktorgefäß, während die wässrige Suspension in dem Reaktorgefäß zirkuliert, in einem Fall, in dem die anorganischen Partikeln Partikeln von Magnesiumcarbonat sind,
(iia) in einem Fall, in dem die anorganischen Partikeln Hydrotalcit-Partikeln sind, ein Schritt des Synthetisierens des Verbundstoffs aus den anorganischen Partikeln und den Fasern durch Eintropfen einer sauren Lösung in eine wässrige Suspension unter Rühren der wässrigen Suspension, wobei die saure Lösung MgCl₂ und AlCl₃ enthält und die wässrige Suspension (a) eine alkalische Lösung, die NaOH und Na₂CO₃ enthält, und (b) die Fasern enthält,
(iib) in einem Fall, in dem die anorganischen Partikeln die Aluminiumhydroxid-Partikeln sind, ein Schritt des Reagierenlassens von Aluminiumsulfat mit Natriumhydroxid in Gegenwart der Fasern durch ein Flüssig-Flüssig-Verfahren,
(iie) in einem Fall, in dem die anorganischen Partikeln die Bariumsulfat-Partikeln sind, ein Schritt des Reagierenlassens von Bariumhydroxid mit Schwefelsäure in Gegenwart der Fasern durch ein Flüssig-Flüssig-Verfahren,
(iid) in einem Fall, in dem die anorganischen Partikeln die anorganischen Partikeln sind, in denen Kalzium und Aluminium komplexiert sind, ein Schritt des Reagierenlassens von Kalziumkarbonat mit Aluminiumsulfat in Gegenwart der Fasern durch ein Flüssig-Flüssig-Verfahren, oder
(iie) in einem Fall, in dem die anorganischen Partikeln die Verbundpartikeln aus Calciumphosphat und Titan sind, ein Schritt des Koexistierenlassens von Titandioxid in einer Reaktionsflüssigkeit, die erhalten wird, um das Calciumphosphat durch Zugabe von Phosphorsäure zu Calciumcarbonat in Gegenwart der Fasern durch ein Flüssig-Flüssig-Verfahren zu synthetisieren.

2. Verfahren nach Anspruch 1, wobei der Verarbeitungsschritt ein Schritt der Formung des Verbundstoffs zu einer Folie bzw. Platte ist.

3. Verfahren nach Anspruch 1, das ferner den Schritt des Formens des Verbundstoffs zu einer Folie bzw. Platte vor der Durchführung des Verarbeitungsschritts umfasst.

4. Verfahren nach einem der Ansprüche 1 bis 3, wobei der Verarbeitungsschritt ein Beschichtungsschritt ist.

5. Verfahren nach einem der Ansprüche 1 bis 3, wobei der Verarbeitungsschritt ein Laminierschritt ist.

6. Verfahren nach einem der Ansprüche 1 bis 3, wobei der Verarbeitungsschritt ein Druckschritt ist.

7. Verfahren nach einem der Ansprüche 1 bis 3, wobei der Verarbeitungsschritt ein Schritt des Verbindens des Verbundstoffs und eines Materials ist, wobei das Material mit dem Verbundstoff identisch oder von dem Verbundstoff verschieden ist.

8. Verfahren nach Anspruch 7, wobei das von dem Verbundstoff verschiedene Material ein Vliesstoff ist.

## Revendications

1. Procédé de production d'un composite de particules inorganiques, ledit procédé et de fibres comprenant les étapes consistant à :
produire le composite de particules inorganiques et de fibres en synthétisant les particules inorganiques dans une solution contenant les fibres ; et
traiter le composite,
dans lequel les particules inorganiques sont des particules de carbonate de magnésium, des particules d'hydrotalcite, des particules de sulfate de baryum, des particules d'hydroxyde d'aluminium, des particules inorganiques dans lesquelles le calcium et l'aluminium sont complexés et qui sont obtenues en faisant réagir du carbonate de calcium avec du sulfate d'aluminium, des particules de phosphate de calcium, ou des particules composites de phosphate de calcium et de titane et dans lequel l'étape de production du composite des particules et des fibres inorganiques consiste en
(i) une étape de synthèse du composite de particules inorganiques et de fibres en injectant une suspension aqueuse qui contient un hydroxyde de Mg²⁺ et les fibres, dans une cuve de réacteur à travers une buse tout en générant des bulles de cavitation, et en soufflant de l'acide carbonique gazeux dans la cuve de réacteur tout en faisant circuler la suspension aqueuse dans la cuve de réacteur, dans un cas où les particules inorganiques sont des particules de carbonate de magnésium,
(iia) une étape consistant, dans le cas où les particules inorganiques sont les particules d'hydrotalcite, à synthétiser le composite des particules et des fibres inorganiques en faisant couler une solution acide dans une suspension aqueuse tout en agitant la suspension aqueuse, la solution acide contenant MgCl₂ et AlCl₃, la suspension aqueuse contenant (a) une solution alcaline contenant NaOH et Na₂CO₃ et (b) les fibres,
(iib) une étape consistant, dans le cas où les particules inorganiques sont les particules d'hydroxyde d'aluminium, à faire réagir le sulfate d'aluminium avec l'hydroxyde de sodium en présence des fibres par un processus liquide-liquide,
(iic) une étape consistant, dans le cas où les particules inorganiques sont les particules de sulfate de baryum, à faire réagir l'hydroxyde de baryum avec de l'acide sulfurique en présence des fibres par un processus liquide-liquide,
(iid) une étape consistant, dans le cas où les particules inorganiques sont les particules inorganiques dans lesquelles le calcium et l'aluminium sont complexés, à faire réagir le carbonate de calcium avec le sulfate d'aluminium en présence des fibres par un processus liquide-liquide, ou
(iie) une étape consistant, dans le cas où les particules inorganiques sont les particules composites de phosphate de calcium et de titane, à faire coexister le dioxyde de titane dans un liquide de réaction qui est obtenu pour synthétiser le phosphate de calcium en ajoutant de l'acide phosphorique au carbonate de calcium en présence des fibres par un processus liquide-liquide.

2. Procédé tel que défini dans la revendication 1, dans lequel l'étape de traitement est une étape de formation du composite en une feuille.

3. Procédé tel que défini dans la revendication 1, comprenant en outre l'étape consistant à former le composite en une feuille avant de réaliser l'étape de traitement.

4. Procédé tel que défini dans l'une quelconque des revendications 1 à 3, dans lequel l'étape de traitement est une étape de revêtement.

5. Procédé tel que défini dans l'une quelconque des revendications 1 à 3, dans lequel l'étape de traitement est une étape de stratification.

6. Procédé tel que défini dans l'une quelconque des revendications 1 à 3, dans lequel l'étape de traitement est une étape d'impression.

7. Procédé tel que défini dans l'une quelconque des revendications 1 à 3, dans lequel l'étape de traitement est une étape de collage du composite et d'un matériau ensemble, le matériau étant identique au composite ou étant différent du composite.

8. Procédé selon la revendication 7, dans lequel le matériau différent du composite est un tissu non tissé.
